# EUROPEAN PATENT SPECIFICATION

(11) **EP 3 490 037 B1**
(45) Date of publication and mention of the grant of the patent: **30.09.2020**
(21) Application number: 17831044.7
(22) Date of filing: 19.07.2017
(51) Int. Cl.: H01M 4/13, H01M 4/131, H01M 4/02, H01M 4/1391, H01M 4/525, H01M 4/62

(54) **ELECTRODE FOR LITHIUM ION BATTERIES, AND LITHIUM ION BATTERY**
ELEKTRODE FÜR LITHIUM-IONEN-BATTERIEN SOWIE LITHIUM-IONEN-BATTERIE
ÉLECTRODE POUR BATTERIES AU LITHIUM-ION, ET BATTERIE AU LITHIUM-ION

(30) Priority: 20.07.2016 JP 2016142140
(43) Date of publication of application: 29.05.2019
(73) Proprietor: Envision AESC Energy Devices Ltd., Sagamihara-shi, Kanagawa (JP)
(72) Inventor: SAITOU Yumi, Sagamihara-shi Kanagawa 252-5298 (JP)
(74) Representative: Glawe, Delfs, Moll
(86) International application number: PCT/JP2017/026110
(87) International publication number: WO 2018/016528

(56) References cited:
- WO-A1-2015/045719
- JP-A- H11 111 270
- JP-A- 2011 233 564
- JP-A- 2014 041 698
- JP-A- 2015 206 754
- JP-B1- 6 176 381
- JP-B2- 5 334 485

## Description

### TECHNICAL FIELD

The present invention relates to an electrode for a lithium-ion battery and a lithium-ion battery.

### BACKGROUND ART

Generally, an electrode that is used in a lithium-ion battery is mainly constituted of an electrode active material layer and a collector layer. The electrode active material layer is obtained by, for example, applying and drying an electrode slurry including an electrode active material, a binder resin, a conductive auxiliary agent, or the like on a surface of the collector layer such as a metal foil.

As a technique regarding the above-described electrode for a lithium-ion battery, for example, techniques described in Patent Documents 1 to 3 are exemplified.

Patent Document 1 (Japanese Unexamined Patent Publication No. 2001-52707) describes a lithium secondary battery for which a positive electrode sheet obtained by applying a mixture made up of a positive electrode active material represented by a compositional formula LiNi₁₋ₓMₓO₂ (M is made of one element or a composition of two or more elements selected from Ti, Mn, Co, Al, and Ga, 0≤x<1), a conductive substance that imparts a conductive property to the positive electrode active material, and a fluorine-based organic binder that binds the positive electrode active material and the conductive substance to a collector sheet surface is used, in which the conductive substance is an amorphous carbon-based substance having a BET specific surface area of equal to or less than 500 m²/g and a bulk density of equal to or more than 0.1 g/cc, furthermore, a density of the mixture that is applied to the collector sheet surface is in a range of 2.0 to 3.5 g/cm³, and an area specific resistance of the positive electrode sheet is equal to or less than 100 mΩcm².

Patent Document 2 (Japanese Unexamined Patent Publication No. 2004-214212) describes a lithium secondary battery which includes an electrode body obtained by winding or laminating a positive electrode plate and a negative electrode plate which are respectively obtained by forming an electrode active material layer on a collector substrate surface through a separator and for which a non-aqueous electrolytic solution is used, in which, as a positive electrode active material, lithium manganate having a cubic spinel structure is used, and a positive electrode plate in which a resistivity p of a positive electrode active material layer in a thickness direction in a state of not being impregnated with the non-aqueous electrolytic solution is equal to or less than 500 Ω·cm.

Patent Document 3 (Japanese Unexamined Patent Publication No. 2013-251281) describes a lithium secondary battery including an electrode body constituted of a positive electrode having a positive electrode active material layer including a positive electrode active material on a surface of a positive electrode collector, a negative electrode having a negative electrode active material layer including a negative electrode active material on a surface of a negative electrode collector, and a separator disposed between the positive electrode and the negative electrode and a battery case that stores the electrode body together with an electrolytic solution, in which a value of a ratio between a surface area of the battery case and an energy capacity of the battery at the time of being fully charged is equal to or more than 4.5 cm²/Wh, and an electric resistivity of the positive electrode is equal to or more than 10 Ω·cm and equal to or less than 450 Ω·cm.

Patent Document 4 (JP 5 334485 B2) discloses a negative electrode current collector for a lithium ion battery, the collector being made of stainless steel and having excellent corrosion resistance and surface contact resistance between the negative electrode current collector and the negative electrode active material.

### RELATED DOCUMENT

### PATENT DOCUMENT

[Patent Document 1] Japanese Unexamined Patent Publication No. 2001-52707
[Patent Document 2] Japanese Unexamined Patent Publication No. 2004-214212
[Patent Document 3] Japanese Unexamined Patent Publication No. 2013-251281
[Patent Document 4] JP 5 334485 B2

### SUMMARY OF THE INVENTION

### TECHNICAL PROBLEM

According to the present inventors' studies, it has been clarified that, in a lithium-ion battery of the related art, there is a case in which battery characteristics such as cycle characteristics cannot be sufficiently improved even when the resistance of an electrode is decreased. In addition, according to the present inventors' studies, it has been clarified that, when the resistance of the electrode is decreased excessively, unexpectedly, the safety of the battery deteriorates.

That is, the present inventors found that, in the lithium-ion battery of the related art, the battery characteristics such as the cycle characteristics and the safety of the battery have a trade-off relationship.

The present invention has been made in consideration of the above-described circumstances and provides an electrode for a lithium-ion battery capable of realizing a lithium-ion battery being excellent in terms of both battery characteristics and safety.

### SOLUTION TO PROBLEM

The present inventors repeated intensive studies in order to achieve the above-described object. As a result, the present inventors found that, when an interface resistance between a collector layer and an electrode active material layer, which is measured using a specific method, is set in a specific range, the above-described trade-off relationship can be improved, and a lithium-ion battery being favorable in terms of both characteristics of battery characteristics such as cycle characteristics and the safety of the battery can be obtained and completed the present invention.

According to the present invention,
there is provided an electrode for a lithium-ion battery according to claim 1.

In addition, according to the present invention,
there is provided a lithium-ion battery including:
the electrode for a lithium-ion battery.

### ADVANTAGEOUS EFFECTS OF INVENTION

According to the present invention, it is possible to provide an electrode for a lithium-ion battery capable of realizing a lithium-ion battery being excellent in terms of both battery characteristics and safety.

### BRIEF DESCRIPTION OF THE DRAWINGS

The above-described object and other objects, characteristics, and advantages will be further clarified using a preferred embodiment described below and the accompanying drawings below.

FIG. 1 is a cross-sectional view showing an example of a structure of an electrode for a lithium-ion battery of an embodiment according to the present invention.

FIG. 2 is a cross-sectional view showing an example of a structure of a lithium-ion battery of the embodiment according to the present invention.

### DESCRIPTION OF EMBODIMENTS

Hereinafter, an embodiment of the present invention will be described using drawings. In all of the drawings, the same constituent element will be given the same reference sign and will not be repeated. In addition, individual constituent elements in the drawings schematically show shapes, sizes, and positional relationships so that the present invention can be understood, and thus the shapes, the sizes, and the positional relationships do not match actual ones. In addition, in the present embodiment, unless particularly otherwise described, a numerical range "A to B" indicates equal to and more than A and equal to and less than B.

### <Electrode for lithium-ion battery>

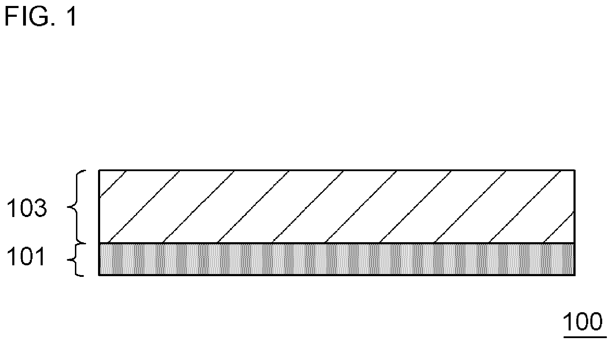

First, an electrode for a lithium-ion battery 100 according to the present embodiment will be described. FIG. 1 is a cross-sectional view showing an example of a structure of the electrode for a lithium-ion battery 100 of an embodiment according to the present invention.

The electrode for a lithium-ion battery 100 of the present embodiment includes a collector layer 101 and an electrode active material layer 103 which is provided on at least one surface of the collector layer 101 and includes an electrode active material, a binder resin, and a conductive auxiliary agent.

In addition, an interface resistance between the collector layer 101 and the electrode active material layer 103, which is measured at a normal pressure by bringing an electrode probe into contact with a surface of the electrode active material layer 103, is more than 0.0010 Ω·cm² and less than 0.10 Ω·cm².

Here, the interface resistance between the collector layer 101 and the electrode active material layer 103 can be measured using, for example, an electrode resistance measurement instrument manufactured by Hioki E. E. Corporation (lithium-ion secondary battery-oriented electrode resistance measurement instrument). First, an electrode probe including 46 measurement pins (measurement probe) is brought into contact with the surface of the electrode active material layer 103 at a normal pressure. Next, a constant current (1 mA) is applied from the surface of the electrode active material layer 103, thereby obtaining a potential distribution of the electrode for a lithium-ion battery 100. From the obtained potential distribution, the interface resistance between the collector layer 101 and the electrode active material layer 103 and the volume resistivity of the electrode active material layer 103 can be calculated.

In the present embodiment, in a case in which the electrode active material layers 103 are provided on both surfaces of the collector layer 101, the interface resistance between the collector layer 101 and the electrode active material layer 103 refers to the interface resistance between the collector layer 101 and only the electrode active material layer 103 provided on one surface of the collector layer 101.

That is, in the present embodiment, in a case in which the electrode active material layers 103 are provided on both surfaces of the collector layer 101, the interface resistance between the collector layer 101 and the electrode active material layer 103 on at least one surface of the collector layer 101 needs to be in the above-described range, and the interface resistances between the collector layer 101 and the electrode active material layer 103 on both surfaces of the collector layer 101 are preferably in the above-described range respectively.

According to the present inventors' studies, it has been clarified that, in a lithium-ion battery of the related art, there is a case in which battery characteristics such as cycle characteristics cannot be sufficiently improved even when the resistance of an electrode is decreased. In addition, according to the present inventors' studies, it has been clarified that, when the resistance of the electrode is decreased excessively, unexpectedly, the safety of the battery deteriorates.

That is, the present inventors found that, in the lithium-ion battery of the related art, the battery characteristics such as the cycle characteristics and the safety of the battery have a trade-off relationship.

Therefore, as a result of intensive studies, the present inventors found that, when the interface resistance between the collector layer and the electrode active material layer, which is measured using a specific method, is set in a specific range, the above-described trade-off relationship can be improved, and a lithium-ion battery being favorable in terms of both characteristics of the battery characteristics such as the cycle characteristics and the safety of the battery can be obtained.

The upper limit of the interface resistances between the collector layer 101 and the electrode active material layer 103 is less than 0.10 Ω·cm², preferably equal to or less than 0.090 Ω·cm², more preferably equal to or less than 0.080 Ω·cm², still more preferably equal to or less than 0.060 Ω·cm², and particularly preferably equal to or less than 0.040 Ω·cm².

In the electrode for a lithium-ion battery 100 according to the present embodiment, when the interface resistances between the collector layer 101 and the electrode active material layer 103 is set to be less than or equal to or less than the above-described upper limit value, the battery characteristics such as the cycle characteristics of a lithium-ion battery to be obtained can be effectively improved.

The lower limit of the interface resistances between the collector layer 101 and the electrode active material layer 103 is more than 0.0010 Ω·cm², preferably equal to or more than 0.0020 Ω·cm², more preferably equal to or more than 0.0030 Ω·cm², still more preferably equal to or more than 0.0040 Ω·cm², far still more preferably equal to or more than 0.0050 Ω·m², and particularly preferably equal to or more than 0.0080 Ω·cm ².

In the electrode for a lithium-ion battery 100 according to the present embodiment, when the interface resistances between the collector layer 101 and the electrode active material layer 103 is set to be more than or equal to or more than the above-described lower limit value, the safety of a lithium-ion battery to be obtained can be effectively improved.

The above-described interface resistance of the electrode for a lithium-ion battery 100 according to the present embodiment can be realized by highly controlling manufacturing conditions such as (A) the blending fraction of the electrode active material layer 103, (B) a method for preparing the electrode slurry for forming the electrode active material layer 103, (C) a method for drying the electrode slurry, (D) a method for pressing the electrode, and the like.

In addition, in the electrode for a lithium-ion battery 100 according to the present embodiment, the volume resistivity of the electrode active material layer 103, which is measured at a normal pressure by bringing the electrode probe into contact with the surface of the electrode active material layer 103, is preferably equal to or less than 5.0 Ω·cm, more preferably equal to or less than 3.0 Ω·cm, and still more preferably equal to or less than 2.5 Ω·cm from the viewpoint of further improving the battery characteristics of a lithium-ion battery to be obtained. In addition, the lower limit of the volume resistivity of the electrode active material layer 103 is not particularly limited, but is, for example, equal to or more than 0.010 Ω·cm, preferably equal to or more than 0.30 Ω·cm, more preferably more than 0.50 Ω·cm, and still more preferably equal to or more than 0.55 Ω·cm from the viewpoint of further improving the safety of a lithium-ion battery to be obtained.

Here, in a case in which the electrode active material layers 103 are provided on both surfaces of the collector layer 101, the volume resistivity of the electrode active material layer 103 refers to the volume resistivity of only the electrode active material layer 103 provided on one surface of the collector layer 101.

That is, in the present embodiment, in a case in which the electrode active material layers 103 are provided on both surfaces of the collector layer 101, the volume resistivity of the electrode active material layer 103 on at least one surface of the collector layer 101 needs to be in the above-described range, and the volume resistivities of the electrode active material layers 103 on both surfaces of the collector layer 101 are preferably in the above-described range respectively.

In addition, in the electrode for a lithium-ion battery 100 according to the present embodiment, when the interface resistance is represented by Rs [Ω·cm²], the volume resistivity of the electrode active material layer 103 is represented by rv [Ω·cm], and the thickness of the electrode active material layer 103 is represented by d [cm], the electrode resistance R of the electrode for a lithium-ion battery 100, which is calculated from R=(Rs + rv x d), is preferably equal to or less than 0.10 Ω·cm², more preferably equal to or less than 0.090 Ω·cm², and still more preferably equal to or less than 0.080 Ω·cm² from the viewpoint of further improving the battery characteristics of a lithium-ion battery to be obtained.

In addition, the lower limit of the electrode resistance R of the electrode for a lithium-ion battery 100 is not particularly limited; however, for example, is more than 0.0010 Ω·cm², preferably equal to or more than 0.0050 Ω·cm², and more preferably equal to or more than 0.010 Ω·cm² from the viewpoint of further improving the safety of a lithium-ion battery to be obtained.

Next, the respective components constituting the electrode active material layer 103 according to the present embodiment will be described.

The electrode active material layer 103 includes an electrode active material, a binder resin, and a conductive auxiliary agent.

The electrode active material that is included in the electrode active material layer 103 according to the present embodiment is appropriately selected depending on the use. When, according to the invention, a positive electrode is produced, a positive electrode active material is used, and, when, not according to the invention, a negative electrode is produced, a negative electrode active material is used.

Here, a positive electrode active material has a poorer electron conductivity than a negative electrode active material, and thus a positive electrode has a higher resistance than a negative electrode and is more likely to affect the battery characteristics of a lithium-ion battery to be obtained. Therefore, the effect of the present embodiment can be more effectively obtained when the electrode for a lithium-ion battery 100 according to the present embodiment is used as a positive electrode. Therefore, the electrode active material that is included in the electrode active material layer 103 is preferably a positive electrode active material since it is possible to more effectively obtain the effect of the present embodiment.

The positive electrode active material is not particularly limited as long as the positive electrode active material is an ordinary positive electrode active material that can be used in a positive electrode of a lithium-ion battery. Examples thereof include complex oxides between lithium and a transition metal such as lithium-nickel complex oxide, lithium-cobalt complex oxide, lithium-manganese complex oxide, lithium-nickel-manganese complex oxide, lithium-nickel-cobalt complex oxide, lithium-nickel-aluminum complex oxide, lithium-nickel-cobalt-aluminum complex oxide, lithium-nickel-manganese-cobalt complex oxide, lithium-nickel-manganese-aluminum complex oxide, and lithium-nickel-cobalt-manganese-aluminum complex oxide; transition metal sulfides such as TiS₂, FeS, and MoS₂; transition metal oxides such as MnO, V₂O₅, V₆O₁₃, and TiO₂; olivine-type lithium oxides, and the like.

Olivine-type lithium oxides include, for example, at least one element from the group consisting of Mn, Cr, Co, Cu, Ni, V, Mo, Ti, Zn, Al, Ga, Mg, B, Nb, and Fe, lithium, phosphorus, and oxygen. In these compounds, some of elements may be partially substituted with other elements in order to improve the characteristics.

Among them, olivine-type lithium iron phosphorus oxide, lithium-nickel complex oxide, lithium-cobalt complex oxide, lithium-manganese complex oxide, lithium-nickel-manganese complex oxide, lithium-nickel-cobalt complex oxide, lithium-nickel-aluminum complex oxide, lithium-nickel-cobalt-aluminum complex oxide, lithium-nickel-manganese-cobalt complex oxide, lithium-nickel-manganese-aluminum complex oxide, and lithium-nickel-cobalt-manganese-aluminum complex oxide are preferred. These positive electrode active materials do not only have a high action potential but also have a large capacity and a large energy density.

The positive electrode active material may be used singly or two or more positive electrode active materials may be used in combination.

The negative electrode active material is not particularly limited as long as the negative electrode active material is an ordinary negative electrode active material that can be used for a negative electrode in a lithium-ion battery. Examples thereof include carbon materials such as natural graphite, artificial graphite, resin charcoal, carbon fibers, activated charcoal, hard carbon, and soft carbon; lithium-based metal materials such as lithium metal and lithium alloys; metal materials such as silicon and tin; conductive polymer materials such as polyacene, polyacetylene, and polypyrrole; and the like. Among these, a carbon material is preferred, and, particularly, a graphite-based material such as natural graphite or artificial graphite is preferred.

The negative electrode active material may be used singly or two or more negative electrode active materials may be used in combination.

An average particle diameter of the electrode active material is preferably equal to or more than 1 µm, more preferably equal to or more than 2 µm, and still more preferably equal to or more than 5 µm from the viewpoint of suppressing a decrease in the charge and discharge efficiency by suppressing a side reaction during charging and discharging and is preferably equal to or less than 80 µm and more preferably equal to or less than 40 µm from the viewpoint of input and output characteristics or electrode production (the flatness of the electrode surface or the like). Here, the average particle diameter refers to the particle diameter at a cumulative value of 50% (median diameter: D₅₀) in a (volume-based) particle size distribution by a laser diffraction scattering method.

When the total amount of the electrode active material layer 103 is assumed as 100 parts by mass, the content of the electrode active material is preferably equal to or more than 85 parts by mass and equal to or less than 99.4 parts by mass, more preferably equal to or more than 90.5 parts by mass and equal to or less than 98.5 parts by mass, and still more preferably equal to or more than 90.5 parts by mass and equal to or less than 97.5 parts by mass.

The binder resin that is included in the electrode active material layer 103 according to the present embodiment is appropriately selected depending on the use. For example, it is possible to use a fluorine-based binder resin that is soluble in a solvent, a water-based binder that is dispersible in water, or the like.

The fluorine-based binder resin is not particularly limited as long as the fluorine-based binder resin is capable of forming an electrode and has a sufficient electrochemical stability, and examples thereof include polyvinylidene fluoride-based resins, fluorine rubber, and the like. The fluorine-based binder resin may be used singly or two or more fluorine-based binder resins may be used in combination. Among these, polyvinylidine fluoride-based resins are preferred. The fluorine-based binder resin can be used by being dissolved in a solvent such as N-methyl-pyrrolidone (NMP).

The water-based binder is not particularly limited as long as the water-based binder is capable of forming an electrode and has a sufficient electrochemical stability, and examples thereof include polytetrafluoroethylene-based resins, polyacrylic acid-based resins, styrene-butadiene-based rubber, polyimide-based resins, and the like. The water-based binder may be used singly or two or more water-based binders may be used in combination. Among these, styrene-butadiene-based rubber is preferred.

Meanwhile, in the present embodiment, the water-based binder refers to a binder that is dispersed in water and capable of forming an emulsion aqueous solution.

In the case of using the water-based binder, it is possible to further use a thickener. The thickener is not particularly limited, and examples thereof include water-soluble polymers such as cellulose-based polymers such as carboxymethyl cellulose, methylcellulose, and hydroxypropyl cellulose and ammonium salts and alkali metal salts thereof; polycarboxylic acid; polyethylene oxide; polyvinylpyrrolidone; polyacrylates salts such as sodium polyacrylate; and polyvinyl alcohol and the like.

When the total amount of the electrode active material layer 103 is assumed as 100 parts by mass, the content of the binder resin is preferably equal to or more than 0.1 parts by mass and equal to or less than 10.0 parts by mass, more preferably equal to or more than 0.5 parts by mass and equal to or less than 5.0 parts by mass, and still more preferably equal to or more than 1.0 part by mass and equal to or less than 5.0 parts by mass. When the content of the binder resin is in the above-described range, the balance among the coatability of the electrode slurry, the binding property of the binder resin, and the battery characteristics are superior.

In addition, when the content of the binder resin is equal to or less than the upper limit value, the fraction of the electrode active material increases, and the capacity per electrode mass increases, which is preferable. When the content of the binder resin is equal to or more than the lower limit value, electrode peeling is suppressed, which is preferable.

The conductive auxiliary agent that is included in the electrode active material layer 103 according to the present embodiment is not particularly limited as long as the conductive auxiliary agent improves the conductivity of the electrode, and examples thereof include carbon black, Ketjen black, acetylene black, natural graphite, artificial graphite, carbon fibers, and the like. The conductive auxiliary agent may be used singly or two or more conductive auxiliary agents may be used in combination.

When the total amount of the electrode active material layer 103 is assumed as 100 parts by mass, the content of the conductive auxiliary agent is preferably equal to or more than 0.5 parts by mass and equal to or less than 8.0 parts by mass, more preferably equal to or more than 0.5 parts by mass and equal to or less than 5.0 parts by mass, still more preferably equal to or more than 1.0 part by mass and equal to or less than 4.5 parts by mass, and particularly preferably equal to or more than 1.5 parts by mass and equal to or less than 4.5 parts by mass. When the content of the conductive auxiliary agent is in the above-described range, the balance among the coatability of the electrode slurry, the binding property of the binder resin, and the battery characteristics are superior.

In addition, when the content of the conductive auxiliary agent is equal to or less than the upper limit value, the fraction of the electrode active material increases, and the capacity per electrode mass increases, which is preferable. When the content of the conductive auxiliary agent is equal to or more than the lower limit value, the conductivity of the electrode becomes more favorable, which is preferable.

In the electrode active material layer 103 according to the present embodiment, when the total amount of the electrode active material layer 103 is assumed as 100 parts by mass, the content of the electrode active material is preferably equal to or more than 85 parts by mass and equal to or less than 99.4 parts by mass, more preferably equal to or more than 90.5 parts by mass and equal to or less than 98.5 parts by mass, and still more preferably equal to or more than 90.5 parts by mass and equal to or less than 97.5 parts by mass. In addition, the content of the binder resin is preferably equal to or more than 0.1 parts by mass and equal to or less than 10.0 parts by mass, more preferably equal to or more than 0.5 parts by mass and equal to or less than 5.0 parts by mass, and still more preferably equal to or more than 1.0 part by mass and equal to or less than 5.0 parts by mass. In addition, the content of the conductive auxiliary agent is preferably equal to or more than 0.5 parts by mass and equal to or less than 8.0 parts by mass, more preferably equal to or more than 0.5 parts by mass and equal to or less than 5.0 parts by mass, still more preferably equal to or more than 1.0 part by mass and equal to or less than 4.5 parts by mass, and particularly preferably equal to or more than 1.5 parts by mass and equal to or less than 4.5 parts by mass.

When the contents of the respective components constituting the electrode active material layer 103 are in the above-described ranges, the balance between the handleability of the electrode for a lithium-ion battery 100 and the battery characteristics of a lithium-ion battery to be obtained are particularly excellent.

The density of the electrode active material layer 103 is not particularly limited, but is preferably set to, for example, 2.0 to 3.6 g/cm³ in a case in which the electrode active material layer 103 is a positive electrode active material layer. In a case not falling under the scope of the invention in which the electrode active material layer 103 is a negative electrode active material layer, the density of the electrode active material layer 103 is preferably set to, for example, 1.0 to 2.0 g/cm³. When the density of the electrode active material layer 103 is in the above-described range, the discharge capacity of the electrode at the time of being used at a high discharge rate improves, which is preferable.

The thickness of the electrode active material layer 103 is not particularly limited and can be appropriately set depending on desired characteristics. For example, the thickness can be set to be thick from the viewpoint of the energy density and can be set to be thin from the viewpoint of the output characteristics. The thickness of the electrode active material layer 103 can be appropriately set in a range of, for example, 10 to 250 µm and is preferably 20 to 200 µm, more preferably 40 to 180 µm, still more preferably 40 to 120 µm, and particularly preferably 40 to 100 µm.

Here, as the thickness of the electrode active material layer 103 increases, the performance balance between the battery characteristics and the safety of a lithium-ion battery to be obtained is likely to deteriorate. Therefore, as the thickness of the electrode for a lithium-ion battery 100 according to the present embodiment, it is possible to more effectively obtain the effect of the present embodiment. Therefore, the thickness of the electrode active material layer 103 is more preferably equal to or more than 40 µm since it is possible to more effectively obtain the effect of the present embodiment.

The collector layer 101 according to the present embodiment is not particularly limited, as a collector layer for a positive electrode, aluminum, stainless steel, nickel, titanium, an alloy thereof, or the like can be used, and aluminum is particularly preferred from the viewpoint of the price, the ease of procurement, the electrochemical stability, and the like. As a collector layer for a negative electrode, copper, stainless steel, nickel, titanium, or an alloy thereof can be used, but copper is particularly preferred from the viewpoint of the price, the ease of procurement, the electrochemical stability, and the like. In addition, the shape of the collector layer 101 is also not particularly limited, but a flat plate-shaped or mesh-shaped collector layer is preferably used in a thickness range of 0.001 to 0.5 mm.

### <Method for manufacturing electrode for lithium-ion battery>

Next, a method for manufacturing the electrode for a lithium-ion battery 100 according to the present embodiment will be described.

The method for manufacturing the electrode for a lithium-ion battery 100 according to the present embodiment is different from a method for manufacturing an electrode of the related art. In order to obtain the electrode for a lithium-ion battery 100 according to the present embodiment having an interface resistance between the collector layer 101 and the electrode active material layer 103 in the above-described range, it is important to highly control manufacturing conditions such as the blending fraction of the electrode active material layer 103, a method for preparing the electrode slurry for forming the electrode active material layer 103, a method for drying the electrode slurry, and a method for pressing the electrode. That is, it is possible to obtain the electrode for a lithium-ion battery 100 according to the present embodiment for the first time using a manufacturing method in which a variety of factors regarding the following four conditions (A) to (D) are highly controlled.
(A) The blending fraction of the electrode active material layer 103
(B) A method for preparing the electrode slurry for forming the electrode active material layer 103
(C) A method for drying the electrode slurry
(D) A method for pressing the electrode

However, for the electrode for a lithium-ion battery 100 according to the present embodiment, with a precondition that a variety of the factors regarding the above-described four conditions are highly controlled, it is possible to employ, for example, a variety of specific manufacturing conditions such as a kneading time, a kneading temperature, or the like of the electrode slurry. In other words, the electrode for a lithium-ion battery 100 according to the present embodiment can be produced by employing a well-known method except for the fact that a variety of the factors regarding the above-described four conditions are highly controlled.

Hereinafter, with a precondition that a variety of the factors regarding the above-described four conditions are highly controlled, an example of the method for manufacturing the electrode for a lithium-ion battery 100 according to the present embodiment will be described.

The method for manufacturing the electrode for a lithium-ion battery 100 according to the present embodiment preferably includes three steps of (1) to (3) below.
(1) A step of preparing the electrode slurry by mixing the electrode active material, the binder resin, and the conductive auxiliary agent,
(2) A step of forming the electrode active material layer 103 by applying and drying the obtained electrode slurry on the collector layer 101, and
(3) A step of pressing the electrode active material layer 103 formed on the collector layer 101 together with the collector layer 101

Hereinafter, the respective steps will be described.

First, (1) the electrode active material, the binder resin, and the conductive auxiliary agent are mixed together, thereby preparing an electrode slurry. The blending fractions of the electrode active material, the binder resin, and the conductive auxiliary agent are the same as the content proportions of the electrode active material, the binder resin, and the conductive auxiliary agent in the electrode active material layer 103 and thus will be not be described.

The electrode slurry is a slurry obtained by dispersing or dissolving the electrode active material, the binder resin, and the conductive auxiliary agent in a solvent such as water.

Regarding the mixing order of the respective components, the electrode slurry is preferably prepared by mixing the electrode active material and the conductive auxiliary agent in a dry manner, then, adding the binder resin and a solvent, and mixing the components in a wet manner.

In such a case, the dispersibility of the conductive auxiliary agent and the binder resin in the electrode active material layer 103 improves, the amounts of the conductive auxiliary agent and the binder resin in the interface between the collector layer 101 and the electrode active material layer 103 can be increased, and it is possible to further decrease the interface resistance between the collector layer 101 and the electrode active material layer 103.

At this time, as a mixer being used, a well-known mixer such as a ball mill or a planetary mixer can be used, and there is no particular limitation.

Next, (2) the obtained electrode slurry is applied and dried on the collector layer 101, thereby forming the electrode active material layer 103. In this step, for example, the electrode slurry obtained by the step (1) is applied and dried on the collector layer 101, and the solvent is removed, thereby forming the electrode active material layer 103 on the collector layer 101.

As a method for applying the electrode slurry onto the collector layer 101, generally, a well-known method can be used. For example, a reverse roll method, a direct roll method, a doctor blade method, a knife method, an extrusion method, a curtain method, a gravure method, a bar method, a dip method, a squeeze method, and the like can be exemplified. Among these, a doctor blade method, a knife method, and an extrusion method are preferred since it becomes possible to obtain a favorable surface state of a coating layer in accordance with properties such as viscosity and a drying property of the electrode slurry.

The electrode slurry may be applied to only one surface of the collector layer 101 or applied to both surfaces. In the case of being applied to both surfaces of the collector layer 101, the electrode slurry may be applied sequentially one by one or applied at the same time to both surfaces. In addition, the negative electrode slurry may be continuously or intermittently applied to the surface of the collector layer 101. The thickness, length, or width of a coating layer can be appropriately determined depending on the size of batteries.

As a method for drying the electrode slurry applied onto the collector layer 101, a method in which the electrode slurry is dried without directly striking hot air to the non-dried electrode slurry is preferred. For example, methods such as a method in which the electrode slurry is dried by indirectly heating the electrode slurry from a side of the collector layer 101 or a side of the already-dried electrode active material layer 103 using a heating roll; a method in which the electrode slurry is dried using electromagnetic waves such as a heater of infrared rays or far-infrared rays and near-infrared rays; and a method in which the electrode slurry is dried by indirectly heating the electrode slurry by striking hot air from the side of the collector layer 101 or the side of the already-dried electrode active material layer 103 are preferred.

In such a case, the eccentric presence of the binder resin and the conductive auxiliary agent on the surface of the electrode active material layer 103 can be suppressed, consequently, the amounts of the conductive auxiliary agent and the binder resin in the interface between the collector layer 101 and the electrode active material layer 103 can be increased, and it is possible to further decrease the interface resistance between the collector layer 101 and the electrode active material layer 103.

Next, (3) the electrode active material layer 103 formed on the collector layer 101 is pressed together with the collector layer 101. As a pressing method, roll pressing is preferred since it is possible to increase the linear pressure and improve the adhesiveness between the electrode active material layer 103 and the collector layer 101, and the roll pressing pressure is preferably in a range of 200 to 300 MPa. In such a case, the adhesiveness between the electrode active material layer 103 and the collector layer 101 improves, and it is possible to further decrease the interface resistance between the collector layer 101 and the electrode active material layer 103.

### <Lithium-ion battery>

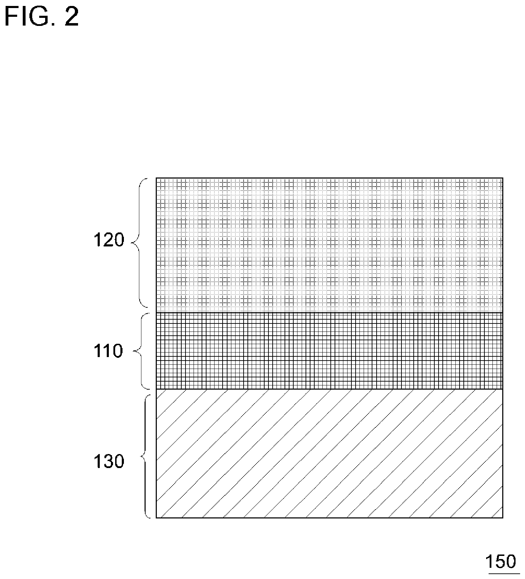

Subsequently, a lithium-ion battery 150 according to the present embodiment will be described. FIG. 2 is a cross-sectional view showing an example of the structure of the lithium-ion battery 150 of the embodiment according to the present invention.

The lithium-ion battery 150 according to the present embodiment includes at least a positive electrode 120, an electrolyte layer 110, and a negative electrode 130, and at least one of the positive electrode 120 and the negative electrode 130 includes the electrode for a lithium-ion battery 100 according to the present embodiment. In addition, the lithium-ion battery 150 according to the present embodiment may include a separator in the electrolyte layer 110 as necessary.

The lithium-ion battery 150 according to the present embodiment can be produced according to a well-known method.

As the form of the electrodes, for example, a laminate, a coiled body, or the like can be used. As an exterior body, for example, a metal exterior body, an aluminium-laminated exterior body, and the like are exemplified. As the shape of the battery, shapes such as a coin shape, a button shape, a sheet shape, a cylindrical shape, a square shape, and a flat shape are exemplified.

As an electrolyte that is used in the electrolyte layer 110, any of well-known lithium salts can be used and may be selected depending on the kind of the electrode active material. Examples thereof include LiClO₄, LiBF₆, LiPF₆, LiCF₃SO₃, LiCF₃CO₂, LiAsF₆, LiSbF₆, LiB₁₀Cl₁₀, LiAlCl₄, LiCl, LiBr, LiB(C₂H₅)₄, CF₃SO₃Li, CH₃SO₃Li, LiCF₃SO₃, LiC₄F₉SO₃, Li(CF₃SO₂)₂N, short-chain fatty acid lithium carbonate, and the like.

A solvent that is used in the electrolyte layer 110 and dissolves the electrolyte is not particularly limited as long as the solvent is a solvent that is ordinarily used as a liquid component that dissolves electrolytes, and examples thereof include carbonates such as ethylene carbonate (EC), propylene carbonate (PC), butylene carbonate (BC), dimethyl carbonate (DMC), diethyl carbonate (DEC), methyl ethyl carbonate (MEC), and vinylene carbonate (VC); lactones such as γ-butyrolactone and γ-valerolactone; ethers such as trimethoxymethane, 1,2-dimethoxyethane, diethyl ether, 2-ethoxyethane, tetrahydrofuran, and 2-methyltetrahydrofuran; sulfoxides such as dimethylsulfoxide; oxolanes such as 1,3-dioxolane and 4-methyl-1,3-dioxolane; nitrogen-containing solvents such as acetonitrile, nitromethane, formamide, and dimethylformamide; organic acid esters such as methyl formate, methyl acetate, ethyl acetate, butyl acetate, methyl propionate, and ethyl propionate; phosphoric acid triester and diglymes; triglymes; sulfolanes such as sulfolane and methylsulfolane; oxazolidinones such as 3-methyl-2-oxazolidinone; sultones such as 1,3-propane sultone, 1,4-butane sultone, and naphthasultone; and the like. These solvents may be used singly or two or more solvents may be used in combination.

As the separator, for example, a porous separator is exemplified. Examples of the form of the separator include a membrane, a film, a non-woven fabric, and the like.

Examples of the porous separator include polyolefin-based porous separators such as polypropylene-based separators and polyethylene-based separators and porous separators formed of polyvinylidene fluoride, polyethylene oxide, polyarylonitrile, a polyvinylidene fluoride hexafluoropropylene copolymer, or the like; and the like.

Hitherto, the embodiment of the present invention has been described, but this is an example of the present invention, and it is also possible to employ a variety of constitutions other than what has been described above.

In addition, the present invention is not limited to the embodiment, and modification, improvement, and the like capable of achieving the object of the present invention are also included in the scope of the present invention.

### EXAMPLES

Hereinafter, the present invention will be described using examples and comparative examples, but the present invention is not limited thereto.

### (Example 1)

### <Production of positive electrode>

As a positive electrode active material, LiNi_{0.8}Mn_{0.1}Co_{0.1}O₂ was used, as a conductive auxiliary agent, carbon black was used, and, as a binder resin, polyvinylidene fluoride was used. First, the positive electrode active material and the conductive auxiliary agent were mixed together in a dry manner. Next, the binder resin and N-methyl-pyrrolidone (NMP) were added to the obtained mixture and mixed together in a wet manner, thereby preparing a positive electrode slurry. This positive electrode slurry was continuously applied and dried on a 20 µm-thick aluminium foil that was a positive electrode collector, thereby producing a positive electrode roll including a coated portion and a non-coated portion to which the positive electrode slurry was not applied in the positive electrode collector. Here, the positive electrode slurry was dried by heating the aluminium foil using a heating roll and indirectly heating the positive electrode slurry. This drying removed NMP in the positive electrode slurry, and a positive electrode active material layer was formed on the aluminium foil.

Next, the aluminium foil and the positive electrode active material layer were pressed by roll pressing at a pressing pressure of 250 MPa, thereby obtaining a positive electrode.

Meanwhile, the blending fractions of the positive electrode active material, the conductive auxiliary agent, and the binder resin were 93/4/3 (mass ratio, positive electrode active material/conductive auxiliary agent/binder resin).

### <Production of negative electrode>

As a negative electrode active material, artificial graphite was used, and, as a binder resin, polyvinylidene fluoride (PVdF) was used. The negative electrode active material and the binder resin were dispersed in N-methyl-pyrrolidone (NMP), thereby preparing a negative electrode slurry. This negative electrode slurry was continuously applied and dried on a 15 µm-thick copper foil that was a negative electrode collector, thereby producing a negative electrode roll including a coated portion and a non-coated portion to which the negative electrode slurry was not applied in the negative electrode collector.

### <Production of lithium-ion battery>

The obtained positive electrode and negative electrodes were laminated together through a polyolefin-based porous separator, and a negative electrode terminal and a positive electrode terminal was provided thereto, thereby obtaining a laminate. Next, an electrolytic solution obtained by dissolving 1 M of LiPF₆ in a solvent made of ethylene carbonate and diethyl carbonate and the obtained laminate were stored in a flexible film, thereby obtaining a lithium-ion battery.

### <Evaluation>

### (1) Measurement of interface resistance and volume resistivity of positive electrode

The interface resistance and the volume resistivity of the positive electrode were measured respectively using an electrode resistance measurement instrument manufactured by Hioki E. E. Corporation (lithium-ion secondary battery-oriented electrode resistance measurement instrument). First, an electrode probe including 46 measurement pins (measurement probe) was brought into contact with the surface of the positive electrode active material layer at a normal pressure. Next, a constant current (1 mA) is applied from the surface of the positive electrode active material layer, thereby obtaining a potential distribution of the positive electrode. From the obtained potential distribution, the interface resistance between the aluminum foil and the positive electrode active material layer and the volume resistivity of the positive electrode active material layer were calculated.

### (2) High-temperature cycle characteristics

The high-temperature cycle characteristics were evaluated using the lithium-ion battery. At a temperature of 45°C, a charge rate was set to 1.0C, a discharge rate was set to 1.0C, a charge end voltage was set to 4.1 V, and a discharge end voltage was set to 2.5 V. The capacity retention (%) is a value obtained by dividing the discharge capacity (mAh) after 500 cycles by the discharge capacity (mAh) at the 10^{th} cycle. A lithium-ion battery having a capacity retention (%) of equal to or more than 85% was evaluated as A, a lithium-ion battery having a capacity retention (%) of equal to or more than 80% and equal to or less than 85% was evaluated as B, and a lithium-ion battery having a capacity retention (%) of less than 80% was evaluated as C.

### (3) Nail penetration test

A metal nail having a diameter of 3 mm was inserted into the central portion of the lithium-ion battery in a fully-charged state, thereby short-circuiting the lithium-ion battery.

Next, the safety of the lithium-ion battery was evaluated using the following standards.
O: No smoke was generated from the lithium-ion battery
X: Smoke was generated from the lithium-ion battery

The above-described evaluation results are shown in Table 1.

### (Example 2)

A positive electrode and a lithium-ion battery were produced in the same manner as in Example 1 except for the fact that the pressing pressure of the roll pressing at the time of producing the positive electrode was changed to 200 MPa, and the respective evaluations were carried out. The respective evaluation results are shown in Table 1.

### (Example 3)

A positive electrode and a lithium-ion battery were produced in the same manner as in Example 1 except for the fact that the pressing pressure of the roll pressing at the time of producing the positive electrode was changed to 300 MPa, and the respective evaluations were carried out. The respective evaluation results are shown in Table 1.

### (Example 4)

A positive electrode and a lithium-ion battery were produced in the same manner as in Example 1 except for the fact that the blending fractions of the positive electrode active material, the conductive auxiliary agent, and the binder resin were changed to 92/4/4 (mass ratio, positive electrode active material/conductive auxiliary agent/binder resin), and the respective evaluations were carried out. The respective evaluation results are shown in Table 1.

### (Example 5)

A positive electrode and a lithium-ion battery were produced in the same manner as in Example 1 except for the fact that the blending fractions of the positive electrode active material, the conductive auxiliary agent, and the binder resin were changed to 93/3/4 (mass ratio, positive electrode active material/conductive auxiliary agent/binder resin), and the respective evaluations were carried out. The respective evaluation results are shown in Table 1.

### (Example 6)

A positive electrode and a lithium-ion battery were produced in the same manner as in Example 1 except for the fact that the blending fractions of the positive electrode active material, the conductive auxiliary agent, and the binder resin were changed to 91.5/4.5/4 (mass ratio, positive electrode active material/conductive auxiliary agent/binder resin), and the respective evaluations were carried out. The respective evaluation results are shown in Table 1.

### (Example 7)

A positive electrode and a lithium-ion battery were produced in the same manner as in Example 6 except for the fact that the pressing pressure of the roll pressing at the time of producing the positive electrode was changed to 300 MPa, and the respective evaluations were carried out. The respective evaluation results are shown in Table 1.

### (Example 8)

A positive electrode and a lithium-ion battery were produced in the same manner as in Example 5 except for the fact that the pressing pressure of the roll pressing at the time of producing the positive electrode was changed to 200 MPa, and the respective evaluations were carried out. The respective evaluation results are shown in Table 1.

### (Comparative Example 1)

A positive electrode and a lithium-ion battery were produced in the same manner as in Example 1 except for the fact that the pressing pressure of the roll pressing at the time of producing the positive electrode was changed to 150 MPa, and the respective evaluations were carried out. The respective evaluation results are shown in Table 1.

### (Comparative Examples 2)

A positive electrode and a lithium-ion battery were produced in the same manner as in Example 1 except for the fact that the pressing pressure of the roll pressing at the time of producing the positive electrode was changed to 350 MPa, and the respective evaluations were carried out. The respective evaluation results are shown in Table 1.

### (Comparative Example 3)

A positive electrode and a lithium-ion battery were produced in the same manner as in Example 1 except for the fact that the blending fractions of the positive electrode active material, the conductive auxiliary agent, and the binder resin were changed to 95.6/0.4/4 (mass ratio, positive electrode active material/conductive auxiliary agent/binder resin), and the respective evaluations were carried out. The respective evaluation results are shown in Table 1.

### (Comparative Example 4)

A positive electrode and a lithium-ion battery were produced in the same manner as in Example 1 except for the fact that the blending fractions of the positive electrode active material, the conductive auxiliary agent, and the binder resin were changed to 90/6/4 (mass ratio, positive electrode active material/conductive auxiliary agent/binder resin), and the respective evaluations were carried out. The respective evaluation results are shown in Table 1.

**[Table 1]**

| | Interface resistance of positive electrode [Ω·cm²] | Volume resistivity of positive electrode active material layer [Ω·cm] | Electrode resistance of positive electrode [Ω·cm²] | Thickness of positive electrode active material layer [µm] | High-temperature cycle characteristics | Nail penetration test |
|---|---|---|---|---|---|---|
| Example 1 | 0.034 | 1.5 | 0.0415 | 50 | A | ○ |
| Example 2 | 0.060 | 2.1 | 0.0705 | 50 | A | ○ |
| Example 3 | 0.0080 | 1.1 | 0.0135 | 50 | A | ○ |
| Example 4 | 0.039 | 1.6 | 0.047 | 50 | A | ○ |
| Example 5 | 0.048 | 2.25 | 0.059 | 50 | A | ○ |
| Example 6 | 0.0192 | 0.56 | 0.022 | 50 | A | ○ |
| Example 7 | 0.0045 | 0.54 | 0.0072 | 50 | A | ○ |
| Example 8 | 0.085 | 2.3 | 0.0965 | 50 | A | ○ |
| Comparative Example 1 | 0.18 | 1.2 | 0.186 | 50 | C | ○ |
| Comparative Example 2 | 0.00080 | 0.50 | 0.0033 | 50 | B | X |
| Comparative Example 3 | 0.22 | 4.8 | 0.244 | 50 | C | ○ |
| Comparative Example 4 | 0.00050 | 0.60 | 0.0035 | 50 | B | X |

Priority is claimed on the basis of Japanese Patent Application No. 2016-142140, filed on July 20, 2016.

## Claims

1. An electrode for a lithium-ion battery (100) comprising:
a collector layer (101); and
an electrode active material layer (103) which is provided on at least one surface of the collector layer (101) and includes an electrode active material, a binder resin, and a conductive auxiliary agent,
wherein an interface resistance between the collector layer (101) and the electrode active material layer (103), which is measured at a normal pressure by bringing an electrode probe into contact with a surface of the electrode active material layer (103) in accordance with the measurement procedure as disclosed in the description, is more than 0.0010 Ω·cm² and less than 0.10 Ω·cm²,
**characterized in that** the electrode active material is a positive electrode active material.

2. The electrode for a lithium-ion battery (100) according to Claim 1,
wherein a thickness of the electrode active material layer (103) is equal to or more than 40 µm.

3. The electrode for a lithium-ion battery (100) according to Claims 1 or 2,
wherein the binder resin includes a fluorine-based binder resin.

4. The electrode for a lithium-ion battery (100) according to any one of Claims 1 to 3,
wherein a volume resistivity of the electrode active material layer (103), which is measured at a normal pressure by bringing an electrode probe into contact with a surface of the electrode active material layer (103), is equal to or less than 5.0 Ω·cm.

5. The electrode for a lithium-ion battery (100) according to Claim 4,
wherein, when the interface resistance is represented by Rs [Ω·m²],
the volume resistivity of the electrode active material layer (103) is represented by rv [Ω·cm], and
the thickness of the electrode active material layer (103) is represented by d [cm],
an electrode resistance R of the electrode for a lithium-ion battery (100), which is calculated from R=(Rs + rv x d), is equal to or less than 0.10 Ω·cm².

6. The electrode for a lithium-ion battery (100) according to any one of Claims 1 to 5,
wherein, when a total amount of the electrode active material layer (103) is assumed as 100 parts by mass,
a content of the binder resin is equal to or more than 0.1 parts by mass and equal to or less than 10.0 parts by mass.

7. The electrode for a lithium-ion battery (100) according to any one of Claims 1 to 6,
wherein, when a total amount of the electrode active material layer (103) is assumed as 100 parts by mass,
a content of the conductive auxiliary agent is equal to or more than 0.5 parts by mass and equal to or less than 8.0 parts by mass.

8. The electrode for a lithium-ion battery (100) according to any one of Claims 1 to 7,
wherein the collector layer (101) includes aluminium.

9. The electrode for a lithium-ion battery (100) according to any one of Claims 1 to 8,
wherein the positive electrode active material includes lithium-nickel-manganese-cobalt complex oxide.

10. A lithium-ion battery (150) comprising:
the electrode for a lithium-ion battery (100) according to any one of Claims 1 to 9.

## Patentansprüche

1. Elektrode für eine Lithiumionenbatterie (100), die Folgendes umfasst:
eine Kollektorschicht (101); und
eine aktive Elektrodenmaterialschicht (103), die auf mindestens einer Oberfläche der Kollektorschicht (101) bereitgestellt ist und ein aktives Elektrodenmaterial, ein Bindemittelharz und ein leitfähiges Hilfsmittel einschließt,
wobei ein Grenzflächenwiderstand zwischen der Kollektorschicht (101) und der aktiven Elektrodenmaterialschicht (103), der bei einem Normaldruck gemessen wird, indem eine Elektrodensonde mit einer Oberfläche der aktiven Elektrodenmaterialschicht (103) in Übereinstimmung mit dem in der Beschreibung offenbarten Messverfahren in Kontakt gebracht wird, mehr als 0,0010 Ω·cm² und weniger als 0,10 Ω·cm² ist,
**dadurch gekennzeichnet, dass** das aktive Elektrodenmaterial ein aktives Material für eine positive Elektrode ist.

2. Elektrode für eine Lithiumionenbatterie (100) gemäß Anspruch 1,
wobei eine Dicke der aktiven Elektrodenmaterialschicht (103) gleich oder mehr als 40 µm ist.

3. Elektrode für eine Lithiumionenbatterie (100) gemäß Anspruch 1 oder 2,
wobei das Bindemittelharz ein fluorbasiertes Bindemittelharz einschließt.

4. Elektrode für eine Lithiumionenbatterie (100) gemäß einem der Ansprüche 1 bis 3,
wobei ein Volumenwiderstand der aktiven Elektrodenmaterialschicht (103), der bei einem Normaldruck gemessen wird, indem eine Elektrodensonde in Kontakt mit einer Oberfläche der aktiven Elektrodenmaterialschicht (103) gebracht wird, gleich oder weniger als 5,0 Ω·cm ist.

5. Elektrode für eine Lithiumionenbatterie (100) gemäß Anspruch 4,
wobei, wenn der Grenzschichtwiderstand durch Rs [Ω·cm²] dargestellt wird,
der Volumenwiderstand der aktiven Elektrodenmaterialschicht (103) durch rv [Ω·cm] dargestellt wird und
die Dicke der aktiven Elektrodenmaterialschicht (103) durch d [cm] dargestellt wird,
ein Elektrodenwiderstand R der Elektrode für eine Lithiumionenbatterie (100), der berechnet wird aus R=(Rs + rv × d), gleich oder weniger als 0,10 Ω·cm² ist.

6. Elektrode für eine Lithiumionenbatterie (100) gemäß einem der Ansprüche 1 bis 5,
wobei, wenn eine Gesamtmenge der aktiven Elektrodenmaterialschicht (103) als 100 Massenteile angenommen wird,
ein Gehalt des Bindemittelharzes gleich oder mehr als 0,1 Massenteile und gleich oder weniger als 10,0 Massenteile ist.

7. Elektrode für eine Lithiumionenbatterie (100) gemäß einem der Ansprüche 1 bis 6,
wobei, wenn eine Gesamtmenge der aktiven Elektrodenmaterialschicht (103) als 100 Massenteile angenommen wird,
ein Gehalt des leitfähigen Hilfsmittels gleich oder mehr als 0,5 Massenteile und gleich oder weniger als 8,0 Massenteile ist.

8. Elektrode für eine Lithiumionenbatterie (100) gemäß einem der Ansprüche 1 bis 7,
wobei die Kollektorschicht (101) Aluminium einschließt.

9. Elektrode für eine Lithiumionenbatterie (100) gemäß einem der Ansprüche 1 bis 8,
wobei das aktive Material für eine positive Elektrode Lithium-Nickel-Mangan-Kobalt-Mischoxid einschließt.

10. Lithiumionenbatterie (50), die umfasst:
eine Elektrode für eine Lithiumionenbatterie (100) gemäß einem der Ansprüche 1 bis 9.

## Revendications

1. Electrode pour une batterie au lithium ion (100) comprenant :
une couche de collecteur (101) ; et
une couche de matériau actif d'électrode (103) qui est disposé sur au moins une surface de la couche de collecteur (101) et qui contient un matériau actif d'électrode, une résine liante, et un agent auxiliaire conducteur,
dans laquelle la résistance à l'interface entre la couche de collecteur (101) et la couche de matériau actif d'électrode (103), qui est mesurée sous la pression normale par mise en contact d'une sonde d'électrode avec une surface de la couche de matériau actif d'électrode (103) conformément à la procédure de mesure telle que divulguée dans la description, est supérieure à 0,0010 Ω•cm² et inférieure à 0,10 Ω•cm²,
**caractérisée en ce que** le matériau actif d'électrode est un matériau actif d'électrode positive.

2. Electrode pour une batterie au lithium ion (100) selon la revendication 1, dans laquelle l'épaisseur de la couche de matériau actif d'électrode (103) est égale ou supérieure à 40 µm.

3. Electrode pour une batterie au lithium ion (100) selon la revendication 1 ou 2, dans laquelle la résine liante contient une résine liante à base de fluor.

4. Electrode pour une batterie au lithium ion (100) selon l'une quelconque des revendications 1 à 3, dans lequel la résistivité volumique de la couche de matériau actif d'électrode (103), qui est mesurée sous la pression normale par mise en contact d'une sonde d'électrode avec une surface de la couche de matériau actif d'électrode (103), est égale ou inférieure à 5,0 Ω•cm.

5. Electrode pour une batterie au lithium ion (100) selon la revendication 4, dans laquelle, quand
la résistance à l'interface est représentée par Rs [Ω•cm²],
la résistivité volumique de la couche de matériau actif d'électrode (103) est représentée par rv [Ω•cm], et
l'épaisseur de la couche de matériau actif d'électrode (103) est représentée par d [cm],
la résistance d'électrode R de l'électrode pour une batterie au lithium ion (100), qui est calculée à partir de R = (Rs + rv x d), est égale ou inférieure à 0,10 Ω•cm².

6. Electrode pour une batterie au lithium ion (100) selon l'une quelconque des revendications 1 à 5, dans laquelle,
quand la quantité totale de la couche de matériau actif d'électrode (103) est supposée être de 100 parties en masse,
la teneur en la résine liante est égale ou supérieure à 0,1 partie en masse et égale ou inférieure à 10,0 parties en masse.

7. Electrode pour une batterie au lithium ion (100) selon l'une quelconque des revendications 1 à 6, dans laquelle
quand la quantité totale de la couche de matériau actif d'électrode (103) est supposée être de 100 parties en masse,
la teneur en l'agent auxiliaire conducteur est égale ou supérieure à 0,5 partie en masse et égale ou inférieure à 8,0 parties en masse.

8. Electrode pour une batterie au lithium ion (100) selon l'une quelconque des revendications 1 à 7, dans laquelle la couche de collecteur (101) contient de l'aluminium.

9. Electrode pour une batterie au lithium ion (100) selon l'une quelconque des revendications 1 à 8, dans laquelle le matériau actif d'électrode positive contient un oxyde complexe de lithium, nickel, manganèse et cobalt.

10. Batterie au lithium ion (150) comprenant l'électrode pour une batterie au lithium ion (100) de l'une quelconque des revendications 1 à 9.
